# EUROPÄISCHE PATENTSCHRIFT

(11) **EP 3 529 745 B1**
(45) Veröffentlichungstag und Bekanntmachung des Hinweises auf die Patenterteilung: **09.10.2024**
(21) Anmeldenummer: 17793884.2
(22) Anmeldetag: 20.10.2017
(51) Int. Cl.: G06V 10/25, G06V 20/58

(54) **ANALYSEVERFAHREN FÜR OBJEKTMARKIERUNGEN IN BILDERN**
METHOD FOR OBJECT ANNOTATION IN IMAGES
PROCÉDÉ D'ANNOTATION D'OBJETS DANS DES IMAGES

(30) Priorität: 24.10.2016 DE 102016220874
(43) Veröffentlichungstag der Anmeldung: 28.08.2019
(73) Patentinhaber: Bayerische Motoren Werke Aktiengesellschaft, 80809 München (DE)
(72) Erfinder: HEIMRATH, Andreas, 82256 Fürstenfeldbruck (DE); KLANNER, Felix, Singapore 639664 (SG); KLÖDEN, Horst, 80797 München (DE)
(86) Internationale Anmeldenummer: PCT/EP2017/076850
(87) Internationale Veröffentlichungsnummer: WO 2018/077746

(56) Entgegenhaltungen:
- SIRION VITTAYAKORN ET AL: "Quality Assessment for Crowdsourced Object Annotations", PROCEDINGS OF THE BRITISH MACHINE VISION CONFERENCE 2011, 9 March 2011 (2011-03-09), pages 109.1 - 109.11, XP055440018, ISBN: 978-1-901725-43-8, DOI: 10.5244/C.25.109
- ENDRES IAN ET AL: "Learning Collections of Part Models for Object Recognition", IEEE COMPUTER SOCIETY CONFERENCE ON COMPUTER VISION AND PATTERN RECOGNITION. PROCEEDINGS, IEEE COMPUTER SOCIETY, US, 23 June 2013 (2013-06-23), pages 939 - 946, XP032493156, ISSN: 1063-6919, [retrieved on 20131002], DOI: 10.1109/CVPR.2013.126
- CABEZAS FERRAN ET AL: "Quality control in crowdsourced object segmentation", 2015 IEEE INTERNATIONAL CONFERENCE ON IMAGE PROCESSING (ICIP), IEEE, 27 September 2015 (2015-09-27), pages 4243 - 4247, XP032827228, DOI: 10.1109/ICIP.2015.7351606
- SUDHEENDRA VIJAYANARASIMHAN ET AL: "Large-scale live active learning: Training object detectors with crawled data and crowds", COMPUTER VISION AND PATTERN RECOGNITION (CVPR), 2011 IEEE CONFERENCE ON, IEEE, 20 June 2011 (2011-06-20), pages 1449 - 1456, XP032037932, ISBN: 978-1-4577-0394-2, DOI: 10.1109/CVPR.2011.5995430
- FELZENSZWALB P F ET AL: "Object Detection with Discriminatively Trained Part-Based Models", IEEE TRANSACTIONS ON PATTERN ANALYSIS AND MACHINE INTELLIGENCE, IEEE COMPUTER SOCIETY, USA, vol. 32, no. 9, September 2010 (2010-09-01), pages 1627 - 1645, XP011327422, ISSN: 0162-8828, DOI: 10.1109/TPAMI.2009.167

## Beschreibung

Die Erfindung betrifft ein Verfahren zur Analyse von Objektmarkierungen in Bildern und eine Analyseeinheit zur Durchführung des Verfahrens.

Die vorliegende Erfindung zeigt ein Analyseverfahren auf, das es erlaubt, eine Qualitätskontrolle für Bilddaten mit einem Label durchzuführen, und eine Aussage darüber zu treffen bzw. zu bewerten, inwieweit eine Objektmarkierung in ihrer Position von einer als ideal angenommenen Position abweicht.

Die Erfindung stellt daher ein Analyseverfahren und eine Analyseeinheit gemäß der unabhängigen Ansprüche bereit. Weiterbildungen der Erfindung sind Gegenstand der abhängigen Ansprüche.

In einem ersten Aspekt wird ein Analyseverfahren zur Überprüfung von wenigstens einer Objektmarkierung in Bilddaten bereitgestellt, wobei das Analyseverfahren Daten wenigstens eines Bildes aus einem Speicher liest, wobei das Bild ein vorbestimmtes Objekt zeigt, ein vorbestimmter Objektteil des vorbestimmten Objekts spezifiziert ist, und für das vorbestimmte Objekt die Objektmarkierung definiert ist, die das vorbestimmte Objekt umgibt, wobei das Analyseverfahren das vorbestimmte Objekt ohne den vorbestimmten Objektteil in den Daten des Bildes detektiert, und, wenn das Analyseverfahren das vorbestimmte Objekt ohne den vorbestimmten Objektteil in dem Bild nicht detektiert ein erstes Signal ausgibt, das anzeigt, dass die Objektmarkierung inkorrekt definiert ist.

Das Analyseverfahren kann die Definition der Objektmarkierung mit den Daten des Bildes aus dem Speicher einlesen, oder die Objektmarkierung in Daten des Bildes erkennen.

Das Analyseverfahren ermittelt eine Distanz zwischen einem Objektmarkierungsabschnitt der Objektmarkierung und dem vorbestimmten Objekt ohne den vorbestimmten Objektteil. Es prüft, ob die Distanz einen Schwellenwert überschreitet/unterschreitet. Das Analyseverfahren gibt ein zweites Signal aus, das anzeigt, dass die Objektmarkierung inkorrekt definiert ist, wenn die ermittelte Distanz den Schwellenwert überschreitet/unterschreitet.

Das Analyseverfahren detektiert den vorbestimmten Objektteil in dem Bild. Es gibt ein drittes Signal aus, das anzeigt, dass die Objektmarkierung inkorrekt definiert ist, wenn der vorbestimmte Objektteil in dem Bild nicht detektiert wird.

Das Analyseverfahren bestimmt eine zweite Distanz zwischen dem Objektmarkierungsabschnitt und dem vorbestimmten Objektteil. Es bestimmt, ob die zweite Distanz einen zweiten Schwellenwert überschreitet/unterschreitet. Wenn die zweite Distanz den zweiten Schwellenwert überschreitet/unterschreitet, gibt das Analyseverfahren ein viertes Signal aus, das anzeigt, dass die Objektmarkierung inkorrekt definiert ist.

Das Analyseverfahren kann mit der Ausgabe eines Signals, vorzugsweise des zweiten und/oder vierten Signals einen Wert ausgeben, vorzugsweise einen Pixel-Wert, der angibt, um wieviel eine Größe und/oder Position der Objektmarkierung von einer idealen Größe und/oder Position für die Objektmarkierung abweicht. Insbesondere kann ein Wert in Pixeln ausgegeben werden, der anzeigt um wieviel die Distanz und/oder die zweite Distanz den Schwellenwert und/oder den zweiten Schwellenwert unterschreitet/überschreitet. Die ideale Position wird von dem Analyseverfahren in einer Trainingsphase ermittelt. Basierend auf der ermittelten Abweichung kann eine automatische Korrektur der Objektmarkierung in dem Bild erfolgen. Die Objektmarkierung kann so in ihrer Größe und ihrer Position korrigiert werden.

Das Analyseverfahren gibt ein fünftes Signal aus, das anzeigt, dass die Objektmarkierung für das vorbestimmte Objekt korrekt definiert ist, insbesondere wenn kein anderes Signal ausgegeben wird.

Vor dem Detektieren des vorbestimmten Objekts ohne den vorbestimmten Objektteil können Daten von Trainings-Bildern zugeführt werden, die jeweils wenigstens ein Objekt von einer Klasse des vorbestimmten Objekts aufweisen. Für das Objekt kann jeweils wenigstens eine Objektmarkierung mit einer vorbestimmten Abweichung definiert sein. Jedes Objekt kann ein Objektteil aufweisen.

Das Analyseverfahren kann für die Trainings-Bilder jeweils den vorbestimmten Objektteil detektieren und dafür den Schwellenwert ermitteln. Der Schwellenwert kann eine Dimension des vorbestimmten Objektteils wiedergeben, insbesondere eine Höhe, Breite und/oder Tiefe, des vorbestimmten Objektteils und vorzugsweise einen Mittelwert.

Das Analyseverfahren kann für die Trainings-Bilder jeweils eine Distanz zwischen einem Objektmarkierungsabschnitt und dem vorbestimmten Objektteil bestimmen und daraus den zweiten Schwellenwert ermitteln. Der zweite Schwellenwert kann eine Distanz von einem Objektmarkierungsabschnitt zu dem vorbestimmten Objektteil wiedergeben, insbesondere einen Mittelwert.

Die Objektmarkierung kann im Wesentlichen ein Polygonzug und insbesondere ein Rechteck sein.

Das vorbestimmte Objekt kann ein Menschlicher Körper sein, vorzugsweise ein Fußgänger und/oder ein Radfahrer.

Der vorbestimmte Objektteil kann ein Kopf, eine Hand, ein Arm, ein Fuß, ein Bein sein und/oder ein Teil davon.

Das Analyseverfahren kann zu Beginn den durch die Objektmarkierung definierten Bildteil extrahieren und weitere Schritte des Analyseverfahrens auf dem Bildteil ausführen.

Das Analyseverfahren kann zu Beginn überprüfen, ob ein durch die Objektmarkierung definiertes Objekt von einem bestimmten Typ ist. Das Analyseverfahren kann insbesondere ein Seitenverhältnis der Objektmarkierung bestimmen, mit wenigstens einem Schwellenwert für das Seitenverhältnis vergleichen und ein Signal ausgeben, das anzeigt, ob das Objekt von dem bestimmten Typ ist oder nicht, wenn der Schwellenwert für das Seitenverhältnis überschritten/unterschritten wird.

Das Analyseverfahren kann auf Basis der Trainings-Bilder wenigstens einen Klassifikator für das vorbestimmte Objekt ohne den vorbestimmten Objektteil und/oder den vorbestimmten Objektteil definieren. Das Analyseverfahren kann den wenigstens einen Klassifikator zur Detektion des vorbestimmten Objekts ohne den vorbestimmten Objektteil und/oder des vorbestimmten Objektteils einsetzen.

Das Analyseverfahren kann auf Basis der Trainings-Bilder wenigstens einen Cascading-Klassifikator ("Cascading Classifier") und/oder wenigstens zwei HOG-SVM-Klassifikatoren definieren. Das Analyseverfahren kann einen HOG-SVM-Klassifikator zur Detektion des vorbestimmten Objekts ohne den vorbestimmten Objektteil einsetzen und/oder den Cascading-Klassifikator und/oder einen zweiter HOG-SVM-Klassifikator zur Detektion des vorbestimmten Objektteils einsetzen.

Das Analyseverfahren kann eine Abweichung der Objektmarkierung von einer idealen Position und/oder Größe der Objektmarkierung, insbesondere pixelgenau, bestimmen. Das Analyseverfahren kann die Abweichung automatisch korrigieren und/oder ein Signal ausgeben, das anzeigt, wie die Objektmarkierung auf die ideale Position und/oder Größe angepasst werden soll.

In einem weiteren Aspekt wird ein Computerprogrammprodukt bereitgestellt, wobei das Computerprogrammprodukt Computerprogrammanweisungen in einem computerlesbaren, insbesondere einem flüchtigen und/oder nichtflüchtigen Speicher speichert, und die Computerprogrammanweisungen zumindest eine Analyseeinheit zur Ausführung eines Analyseverfahrens, wie es hierin beschrieben ist, veranlassen, wenn die Computerprogrammanweisungen von der Analyseeinheit gelesen und/oder ausgeführt werden.

In noch einem weiteren Aspekt wird eine Analyseeinheit zur Überprüfung von wenigstens einer Objektmarkierung in Bilddaten bereitgestellt, aufweisend wenigstens einen Speicher, der die Bilddaten, Daten zu Objektmarkierungen und/oder die Trainings-Bilddaten speichert und einen Prozessor, der dazu eingerichtet ist, ein Analyseverfahren auszuführen wie es hierin beschrieben ist, wobei die Bilddaten, Daten zu Objektmarkierungen und/oder die Trainings-Bilddaten von der Analyseeinheit aus dem Speicher ausgelesen werden und die Daten durch den Prozessor verarbeitet werden, und wobei die Analyseeinheit Signale des Analyseverfahrens ausgibt, vorzugsweise in den oder einen weiteren Speicher.

Die Erfindung wird nunmehr auch mit Blick auf die Figuren beschrieben. Es zeigen:
- Fig. 1: eine schematische Darstellung eines allgemeinen Verfahrensablaufs des Analyseverfahrens,
- Fig. 2: eine schematische Darstellung eines Verfahrensablaufs des Analyseverfahrens,
- Fig. 3: das Analyseverfahren anhand eines exemplarischen Objekts, und
- Fig. 4: eine schematische Darstellung der Analyseeinheit.

Bei der Umfelderfassung von Fahrzeugen ist es erforderlich, dass Objekte im Umfeld des Fahrzeugs erfasst und insbesondere nachverfolgt werden können. Dies ist für Fahrerassistenzsysteme von Bedeutung, die direkt oder indirekt das Verhalten des Fahrzeugs beeinflussen bzw. eine Information an einen Fahrzeugnutzer ausgeben können. Die Fahrerassistenzsysteme weisen dafür Sensoren und insbesondere optische Sensoren, wie Kameras, auf, um das Fahrzeugumfeld zu erfassen und Objekte im Fahrzeugumfeld zu erkennen. Beispiele für Objekte im Fahrzeugumfeld sind andere Objekte bzw. Verkehrsteilnehmer wie bspw. Personen und insbesondere Fahrradfahrer oder Fußgänger.

Damit ein Fahrerassistenzsystem ein Objekt im Umfeld des Fahrzeugs rechtzeitig erkennen kann und z.B. ein Brems- oder Ausweichmanöver einleiten kann, ist es erforderlich, einen Verkehrsteilnehmer möglichst früh zu erkennen und zu bewerten, wie kritisch ein Verhalten des Verkehrsteilnehmers für das Fahrzeug oder den Fahrtverlauf ist. Dabei ist es möglich, dass durch Anwendung von Bildanalyseverfahren auch Teile des Objekts im Umfeld des Fahrzeuges erkannt werden können und insbesondere Körperteile einer Person. Auf Basis der Stellung der Körperteile bzw. einer Bewegung der Teile kann eine Aussage über ein mögliches Vorhaben bzw. Verhalten des Objekts getroffen werden. So kann z.B. aus der Stellung des Kopfes eines Verkehrsteilnehmers abgeleitet werden, ob er beabsichtigt eine Straße zu überqueren. Es ist daher insbesondere notwendig, zu bestimmen, ob ein Verkehrsteilnehmer insbesondere im Bereich des Kopfes ganz oder teilweise verdeckt ist.

Fahrerassistenzsysteme können dabei auf ihren Einsatz mit Methoden des Maschinenlernens vorbereitet werden. Diese basieren auf der automatischen Erkennung von Mustern in Daten von Bildern und dem Bestimmen von Modellen zur Unterscheidung von Daten unterschiedlicher Klassen. Diese Unterscheidung kann ohne Vorwissen (unsupervised) oder mit Vorwissen (supervised) über die zu unterscheidenden Klassen erfolgen.

Insbesondere kann ein Assistenzsystem mit Modellen ausgestattet sein, die vorgeben, wie ein Fahrerassistenzsystem Bilddaten auszuwerten hat und welche Objektklassen von dem Fahrerassistenzsystem detektiert werden sollen bzw. wie die Objekte detektiert werden sollen.

Ein Training erfolgt in diesem Fall mit einer Vielzahl von Bildern, die jeweils Objekte der zu erkennenden Objektklassen aufweisen. Beispielsweise kann ein Fahrerassistenzsystem so auf die Erkennung von Fahrradfahrern oder Fußgängern trainiert werden bzw. konfiguriert sein.

Die Objekte werden normalerweise durch eine Objektmarkierung beschrieben, die auch als "Bounding Box" bezeichnet wird. Bei der Bounding Box handelt es sich um einen Polygonlinienzug, der das zu erkennende Objekt umgibt. Insbesondere ist der Polygonlinienzug als ein Rechteck ausgebildet, das das Objekt umschließt. Entsprechend kann das Objekt durch die Objektmarkierung beschrieben werden. Die Objektmarkierung kann dabei automatisiert oder durch manuelles Markieren des Objekts mit der Objektmarkierung, dem so genannten "Labeln" erstellt werden. Das Labeln erfolgt entweder durch einen Experten oder durch einen Laien (Bearbeiter). Ein Label enthält folglich das abgebildete Objekt und ist definiert durch die Bildkoordinaten des Polygonlinienzugs, der das Objekt umgibt.

Für ein Lernen eines Erscheinungsbildes eines Objekts wird also eine hohe Anzahl von Labeln mit einem Objekterkennungsalgorithmus verarbeitet, der ein Maschinenlernen einsetzt oder darauf basiert. Dazu ist es entscheidend, dass die Trainingsdaten möglichst gut bzw. korrekt "gelabelt" sind, dass also die Bounding Box bzw. die Objektmarkierung für die Objekte in den Bildern möglichst genau platziert wurden.

Es muss folglich eine Qualitätsprüfung der gelabelten Bilder dahingehend erfolgen, ob die Label bzw. Objektmarkierungen in den Bildern korrekt platziert wurden. Um diese Qualitätskontrolle durchzuführen sind bereits mehrere Ansätze bekannt:

Zunächst kann eine Qualitätskontrolle von Labeln bzw. Objektmarkierungen manuell erfolgen. Die Label werden dann in Bezug auf die Bilder manuell geprüft und es erfolgt stichprobenartig eine Kontrolle durch visuellen Abgleich der Übereinstimmung (Position, Größe) vom Label und im Bild abgebildeten Objekt (vgl. Su, H., Deng, J. and Li, F.-F. (2012). Crowdsourcing Annotations for Visual Object Detection. In: AAAI Human Computation Workshop, pp. 40-46.). Eine Stichprobenauswahl kann dabei auf einfachem Weg erfolgen, bspw. kann jedes x-te Bild (z.B. jedes 5., 10. oder 15. Bild) oder jedes Bild mit überdurchschnittlich vielen Objekten ausgewählt werden.

Weiter kann eine stichprobenartige oder vollständige Qualitätskontrolle durch Kreuzvalidierung und durch erneutes und redundantes manuelles Labeln durch zwei Experten oder Laien erfolgen. Dies kann bspw. in einem so genannten Crowdsourcing -Ansatz durchgeführt werden, bei dem jeder Teilnehmer einen Anreiz für das Validieren von Labeln erhält (vgl. auch Labeling durch Laien mit öffentlichem Datensatz und Software-Werkzeug http://labelme2.csail.mit.edu /Release3.0/index.php). Die Kreuzvalidierung kann z.B. auch durch eine große Anzahl von Laien erfolgen, wobei die Validierungsaufgabe in einem Spielekontext erfolgt (vgl. auch Ansatz der Pallas Ludens GmbH, https://pallas-ludens.com).

Schließlich können zur automatischen Qualitätskontrolle der Label existierende Algorithmen eingesetzt werden, die für ein Objekt umschließende Formen erzeugen. Diese Formen führen insbesondere entlang von Farb- und/oder Helligkeitsgrenzen (bspw. entlang von Grauwertkanten bei einem Graustufenbild). Eine solche Form schmiegt sich dann an ein Objekt an, das auf dem Bild gezeigt ist. Eine Bewertung des Labels erfolgt dann durch Beurteilung der Objektmarkierung mit Bezug auf die durch den Algorithmus generierte Form mit qualitativen Marken (z.B. Flächenlapp Label - Ground Truth (vgl. Vittayakorn, S. and Hays, J. (2011). Quality Assessment for Crowdsourced Object Annotations. In: Hoey, J., McKenna, S. and Trucco, E., eds., Proceedings of the British Machine Vision Conference, BMVA Press, pp. 109.1-109.11.). Die Verwendung von Objektteilen, um festzustellen, ob die Objektbeschriftung korrekt lokalisiert wurde, ist ebenfalls aus dem Stand der Technik bekannt (z.B. lan et al. (2013). Learning collections of part models for object recognition", ISSN: 1063-6919, DOI: 10.1109/CVPR.2013.126).

Auch das Verhalten und die Leistung von Bearbeitern kann automatisch durch Bestimmung von numerischen Größen (z.B. benötigte Zeit zum Labeln eines Objekts) abgeschätzt werden. So kann auf die Qualität der Label rückgeschlossen werden (vgl. Sameki, M., Gurari, D. and Betke, M. (2015). Characterizing Image Segmentation Behavior of the Crowd. Collective Intelligence Conference, San Francisco.).

Die bekannten Verfahren zur Qualitätskontrolle von Objektmarkierungen in Bildern erlauben es jedoch nicht, eine Aussage darüber zu treffen bzw. zu bewerten, inwieweit die Objektmarkierung von einer als ideal angenommenen Position abweicht. Es ist daher keine automatisierte Quantifizierung der Abweichung möglich und in der Folge kann auch keine automatische Korrektur einer Objektmarkierung in einem Bild erfolgen. Somit ist auch keine automatische Analyse eines Bilddatensatzes bzgl. einer Struktur und Verteilung von Fehlern bei der Positionierung der Objektmarkierung bzw. in der Bounding Box möglich.

Das Analyseverfahren analysiert also wenigstens ein Bild auf Basis der Bilddaten des Bildes. Ein Objekt, wie z.B. ein Fußgänger oder ein Radfahrer, ist in den Bilddaten durch eine so genannte Objektmarkierung beschrieben. Das Analyseverfahren ist insbesondere darauf ausgelegt, zu erkennen, ob die Objektmarkierung, das Objekt, insbesondere einen als wichtig definierten Objektteil, schneidet. Insbesondere wird von dem Analyseverfahren geprüft, ob der als wichtig definierte Objektteil in der Objektmarkierung erkannt werden kann.

Beispielsweise ist es bei der Erkennung von Fußgängern oder Radfahrern wichtig, dass keine Fehler im Bereich des Kopfes einer Person vorhanden sind und insbesondere der Kopf einer Person vollständig in der Objektmarkierung enthalten ist. Um dies zu ermöglichen, erzeugt das Analyseverfahren sog. Modelle für Klassifikatoren. Diese Modelle bzw. Klassifikatoren stellen logische Anweisungen bereit, wie Bilder bzw. Objektmarkierungen zu bewerten sind.

Vor der eigentlichen Analyse von Bilddaten wird das Analyseverfahren zunächst mit Trainings-Bilddaten trainiert, um die Modelle und Klassifikatoren zu erstellen und/oder anzupassen. Hierbei werden die Klassifikatoren definiert, die dann bei der Bewertung der Objektmarkierungen in Bilddaten eingesetzt werden.

Die Trainings-Bilddaten, also die Bilddaten, die dem Analyseverfahren in der Trainingsphase zugeführt werden, weisen dabei auch Fehler bei der Platzierung der Objektmarkierung um wenigstens ein Objekt auf, z.B. um einen Fußgänger. Bei dem Fehler handelt es sich hierbei um eine Verschiebung der Objektmarkierung, die genau definiert und für jedes Bild bekannt ist.

Während des Trainings wird für jede genau definierte Verschiebung der Objektmarkierung bzw. der Bounding Box ein Klassifikator trainiert bzw. erstellt. Die so erzeugten Klassifikationsmodelle, z.B. Support-Vector-Machine-Modelle (SVM-Modelle), werden verwendet, um später die Bilddaten auf Korrektheit, d.h. auf eine korrekte Platzierung der jeweiligen Objektmarkierung bzw. Bounding Box zu testen. Es kann dann eine quantitative und qualitative Aussage über die Korrektheit der Objektmarkierung gemacht werden.

Selbstverständlich kann das Analyseverfahren auch auf andere Objektklassen als die bereits exemplarisch genannten Fußgänger oder Fahrradfahrer angewendet werden und insbesondere auf andere Verkehrsteilnehmer wie Autos, Motorräder, usw.

Bevor das Analyseverfahren also auf die zu kontrollierenden Bilddaten angewendet wird, werden die Klassifikatoren bestimmt, um das Objekt in den Bildern zu erkennen. Dazu werden, wie bereits beschrieben, die bereits gelabelten Trainings-Bilddaten dem Analyseverfahren zugeführt. Die in dieser Trainingsphase definierten Klassifikatoren können insbesondere Teil wenigstens eines Modells sein. Festgelegt ist für das Analyseverfahren auch, welche Klasse von Objekten untersucht werden soll. Die Objektklasse bestimmt also auch, für welche Objekte in den Bilddaten die Position und/oder Größe der Objektmarkierung überprüft wird.

Für das Erstellen der Modelle wird ein Datensatz von Bildern und Objektmarkierungen benötigt. Zu jedem Bild, gehört ein Label, das angibt zu welcher Klasse das auf dem Bild gezeigt Objekt gehört. Ein weiterer Teil des Labels definiert die Position und/oder Größe der Objektmarkierung im Bild, die das Objekt im Bild einschließt. Ein Erstellen von Modellen kann auf Basis von hochwertigen Ausgangsdaten erfolgen. Es kann eine Anforderung dahingehend bestehen, dass ein definierter Abstand der Objektmarkierung von einem Rand des Objektes im Bild gefordert ist. Die Trainings-Bilddaten können als weitere Bilder und Label aus Ausgangsdaten durch definierte Verschiebung der Objektmarkierung erzeugt werden. Die Ausgangsdaten und Trainings-Bilddaten bilden dann die Daten, die in der Trainingsphase verwendet werden.

Weiter erfolgt eine Auswahl eines Deskriptors zur Beschreibung der Bilder. Es kann ein Deskriptor verwendet werden, der spezifische Muster, die sich durch die Verschiebung der Objektmarkierung, v.a. in den Randbereichen ergeben können, beschreiben kann. Der Deskriptor kann ein "histogram of oriented gradients" - Deskriptor, kurz HOG-Deskriptor, sein. Es kann auch ein Deskriptor auf Basis von Merkmalen der schnellen Fourier-Transformation (FFT) und Bildgradienten verwendet werden.

Die Modelle für die diskreten Verschiebungen der Objektmarkierung in x- und/oder y-Richtung können mit wenigstens einem Klassifikator z.B. auf SVM-Basis (SVM = Support Vector Machine) erstellt werden. Eine Optimierung der Parameter zur Erstellung der Modelle kann z.B. mittels Kreuzvalidierung erfolgen.

In der Trainingsphase wird z.B. durch Stichproben aus den Trainings-Bilddaten jeweils ein Objektteil separat betrachtet, für den ein insbesondere statistisch bestimmter Wert, vorzugsweise ein Mittelwert, definiert wird. Dieser Wert gibt bspw. eine Dimension des Objektteils wider, wie eine Höhe, Breite, Tiefe oder eine Entfernung zu einem anderen Bildbestandteil. Dazu kann ein so genannter "Cascading Classifier" (kaskadierender Klassifikator, Paul Viola, Michael Jones, Robust Real-time Object Detection (2001), International Journal of Computer Vision) mit Boosting mit einer Vielzahl von Objektteilen trainiert werden. Der Cascading-Klassifikator kann jedoch auch durch einen anderen Klassifikator ersetzt werden.

Zusätzlich wird ein weiterer Klassifikator und insbesondere ein HOG-SVM-Klassifikator (im Folgenden als HOG-SVM-1-Klassifikator bezeichnet) mit einer Vielzahl von Objektteilen trainiert. Dazu können bspw. Trainingsdaten, die lediglich entsprechende Objektteile aufweisen, verwendet werden.

Ein dritter Klassifikator (wiederum vorzugsweise ein HOG-SVM-Klassifikator, der im Folgenden als HOG-SVM-2-Klassifikator bezeichnet wird) wird mit einer Vielzahl von Objekten trainiert, die den Objektteil nicht aufweisen.

Ein Beispiel für ein Training auf Fußgänger wäre bspw., dass der Cascading-Klassifikator mit einer Vielzahl von Köpfen trainiert wird, ebenso wie der HOG-SVM-1 - Klassifikator, während der HOG-SVM-2-Klassifikator mit einer Vielzahl von Körpern ohne Köpfe trainiert wird.

Nach der Trainings- bzw. Lernphase sind die Klassifikatoren definiert und dem Analyseverfahren können nun die zu prüfenden Bilddaten zugeführt werden.

Das Analyseverfahren lässt sich nun allgemein wie folgt beschreiben: In einem ersten Schritt wird die Objektmarkierung in den Bilddaten erkannt und extrahiert. Dies ist insbesondere dann möglich, wenn sich die Objektmarkierung farblich oder in ihrem Grauwert von den anderen Bilddaten so unterscheidet, dass eine Farb- oder Grauwertgrenze definiert bzw. erkannt werden kann. Zudem können auch die Koordinaten der jeweiligen Objektmarkierung mit den Bilddaten übermittelt werden.

In einem zweiten Schritt wird nun das Innere der Objektmarkierung, also das Innere der Bounding Box, darauf getestet, ob das Objekt innerhalb der Objektmarkierung erkannt werden kann, das den vorher definierten Objektteil nicht aufweist. Beispielsweise kann der Bildinhalt innerhalb der Objektmarkierung durch Abtasten bzw. Abrastern des Bildes mit einem so genannten Sliding-Window-Ansatz analysiert werden, bei dem das Bild anhand eines sich verschiebenden Ausschnitts analysiert wird.

Die Bildausschnitte werden dann dem HOG-SVM-2-Klassifikator zugeführt, der die einzelnen Bildausschnitte bewertet. Diese Bewertung, die auch als Score bezeichnet wird, gibt eine Wahrscheinlichkeit an, mit der das zu erkennende Objekt ohne den Objektteil in dem Bildausschnitt erkannt werden kann. Es wird nun der Bildausschnitt gewählt, der die höchste Wahrscheinlichkeit für eine Erkennung des Objekts ohne Objektteil vorgibt.

Kann indessen das Objekt ohne den Objektteil in der Objektmarkierung bzw. den Bildausschnitten nicht detektiert/erkannt werden, so kann das Analyseverfahren ein Signal ausgeben, das anzeigt, dass ein inkorrektes Labeling vorliegt, dass also die Objektmarkierung bzw. die Bounding Box nicht korrekt ist.

Wird jedoch das Objekt ohne den Objektteil erkannt, wird eine Distanz von einem Abschnitt der Objektmarkierung zu dem Objekt ohne den Objektteil, und/oder in umgekehrter Richtung, bestimmt. Insbesondere wird dieser Teil von einem Objektmarkierungsabschnitt, z.B. einem Rand der Bounding Box, der Objektmarkierung aus bestimmt, der von einem Schwerpunkt des Objekts ohne Objektteil in Richtung des Objektteils zuerst erreicht wird. Diese Distanz wird nun mit dem Wert verglichen, der in der Trainingsphase für den Objektteil mit dem HOG-SVM-2-Klassifikator bestimmt wurde. Dieser Wert stellt nun einen Schwellenwert dar. Liegt die Distanz bspw. unterhalb des Schwellenwertes, die z.B. eine Höhe, Breite und/oder Tiefe für Köpfe in Bildern angibt, so kann davon ausgegangen werden, dass der Objektteil (hier Kopf) nicht vollständig in der Objektmarkierung liegt, dass also das zu erkennende Objekt nicht vollständig durch die Objektmarkierung definiert ist. Insgesamt wird also anhand des Schwellenwerts diskriminiert, ob die Distanz zwischen dem Objektmarkierungsabschnitt der Objektmarkierung und dem Objekt ohne den Objektteil zu groß oder zu klein ist.

Liegt die Distanz unterhalb/oberhalb des Schwellenwertes kann davon ausgegangen werden, dass in dem Bereich des Objektteils ein Schnitt mit der Objektmarkierung besteht, dass also die Objektmarkierung das Objekt schneidet. Das Analyseverfahren kann nun ein Signal ausgeben, das einerseits anzeigt, dass eine Objektmarkierung nicht korrekt angeordnet ist. Andererseits kann in dem Signal eine Information enthalten sein, die angibt, um wie viel Pixel die Position und/oder Größe der Objektmarkierung in wenigstens einer Richtung von einer (z.B. statistisch ermittelten) Idealposition und/oder -größe abweicht. Die Idealposition bzw. -größe wird in der Trainingsphase definiert, auf Basis der Training-Bilddaten. Eine Bewertung erfolgt auf Basis der trainierten Modelle, die mit definierten Verschiebungen trainiert wurden, und so wenigstens eine Verschiebung in eine Richtung spezifisch detektieren können.

Zeigt der Vergleich jedoch an, dass die Distanz zwischen Objektmarkierung und Objekt ohne Objektteil ausreichend groß dimensioniert ist, so wird davon ausgegangen, dass der Objektteil vollständig innerhalb der Objektmarkierung liegt. Das Verfahren kann dann mit dem nächsten Schritt fortgeführt werden.

In einem dritten Schritt wird nun mittels des Cascading-Klassifikators der Objektteil untersucht. Wird innerhalb der Objektmarkierung der Objektteil nicht detektiert, so wird der Suchbereich in dem Bild von einem Bildrand ausgehend schrittweise erweitert. Beispielsweise kann dabei von einem oberen Bildrand ausgegangen werden. Der Cascading-Klassifikator kann mehrere detektierte Objekte und deren Koordinaten zurückgeben. Diese Koordinaten werden dann verwendet, um Bildausschnitte dieser Objektteile zu erstellen, die anschließend mit dem HOG-SVM-1-Klassifikator untersucht werden. Dieser bewertet wiederum die Bildausschnitte. Die Bildausschnitte mit der höchsten Bewertung werden gewählt und es wird eine zweite Distanz des Objektteils zu einem Objektmarkierungsabschnitt (d.h. einem Abschnitt des Polygonlinienzugs) der Objektmarkierung, und/oder umgekehrt, bestimmt. Bei dem Objektmarkierungsabschnitt der Objektmarkierung kann es sich vorzugsweise um den gleichen Objektmarkierungsabschnitt handeln, der bereits für die Ermittlung der Distanz verwendet wurde.

Die zweite Distanz zwischen dem Objektmarkierungsabschnitt der Objektmarkierung und dem Objektteil wird mit dem Wert verglichen, der durch den HOG-SVM-1-Klassifikator in der Trainingsphase ermittelt wurde. Dabei kann es sich vorzugsweise um einen statistisch erzeugten Wert bzw. einen Mittelwert handeln. Dieser wird als zweiter Schwellenwert verwendet und ermöglicht eine weitere Diskriminierung und eine Aussage darüber, ob eine Positionierung und/oder Größe der Objektmarkierung korrekt gewählt wurde. Insbesondere wird der im Trainingsverfahren bestimmte zweite Schwellenwert mit der zweiten Distanz zwischen Objektmarkierungsabschnitt und dem Objektteil verglichen. Ist diese Distanz zu groß oder zu klein kann wieder eine Aussage über die Lage der Objektmarkierung zu dem Objekt insgesamt gemacht werden. Ist bspw. die Distanz zwischen Objektmarkierung und Objektteil zu groß, so kann davon ausgegangen werden, dass die Objektmarkierung zu groß gewählt wurde. Entsprechend kann das Analyseverfahren ein Signal ausgeben, das eine inkorrekte Positionierung der Objektmarkierung anzeigt. Mit diesem Signal kann ebenfalls ausgegeben werden, um wie viel Pixel in einer Richtung die Objektmarkierung von der Idealposition und/oder -größe abweicht.

Kann der Objektteil auch nach Vergrößerung des Suchbereichs nicht detektiert werden, so kann ebenfalls eine inkorrekte Positionierung der Objektmarkierung angenommen und eine inkorrekte Platzierung der Objektmarkierung erkannt werden. Entsprechend kann das Analyseverfahren wiederum ein Signal ausgeben, das eine inkorrekte Positionierung der Objektmarkierung anzeigt.

Wenn alle Schritte des Analyseverfahrens durchlaufen werden, ohne dass eine inkorrekte Platzierung der Objektmarkierung erkannt wurde, wird die Objektmarkierung als korrekt platziert und/oder dimensioniert bewertet. Dabei können der Schwellenwert und der zweite Schwellenwert verschieden oder identisch sein.

Im Folgenden wird ein konkretes Ausführungsbeispiel des Analyseverfahrens nach einem Training für eine bestimmte Objektklasse beschrieben. In dem Training für die zu untersuchende Objektklasse des Fußgängers wird, z.B. in Stichproben, ein Maß für einen Kopf bestimmt und/oder statistisch erfasst. Es wird dabei bspw. ein Wert berechnet, der ein Mittelwert für die Höhe eines Kopfes in einem Bild angibt. Dieser wird im Folgenden als Schwellenwert verwendet. Ein Cascading-Klassifikator wird mit tausenden von Köpfen trainiert. Ein HOG-SVM-Klassifikator wird ebenfalls mit tausenden von Köpfen trainiert. Ein HOG-SVM-2-Klassifikator wird mit tausenden von Bildern von Körpern ohne Kopf trainiert.

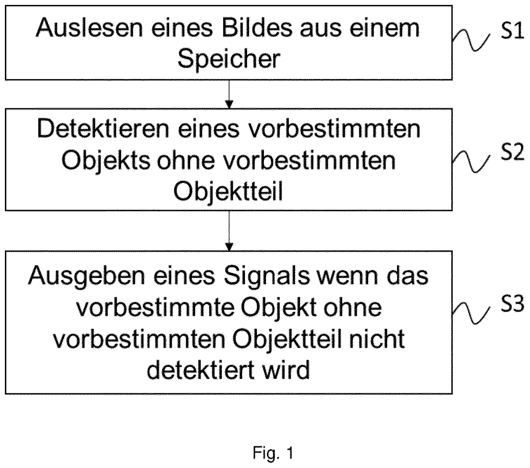

Fig. 1 zeigt nun den allgemeinen Verfahrensablauf des Analyseverfahrens schematisch. In einem ersten Schritt S1 erfolgt ein Auslesen wenigstens eines Bildes aus einem Speicher. In einem zweiten Schritt S2 wird ein vorbestimmtes Objekt ohne vorbestimmten Objektteil detektiert. Anschließend wird in einem dritten Schritt S3 ein Signal ausgegeben, wenn das vorbestimmte Objekt ohne vorbestimmten Objektteil nicht detektiert wird. Es kann selbstverständlich auch ein Signal ausgegeben werden, wenn das vorbestimmte Objekt ohne vorbestimmten Objektteil detektiert wird.

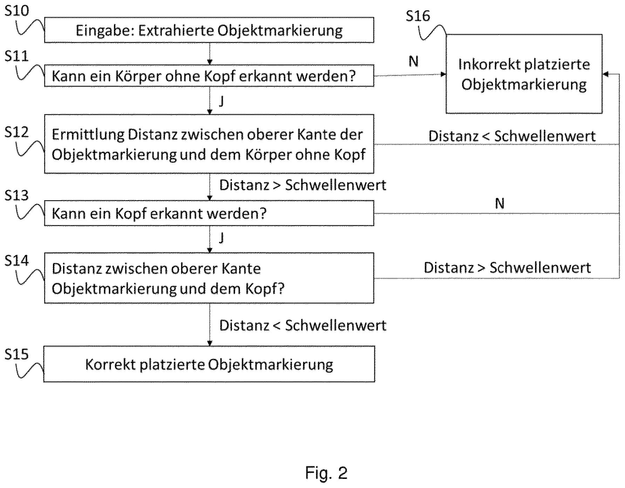

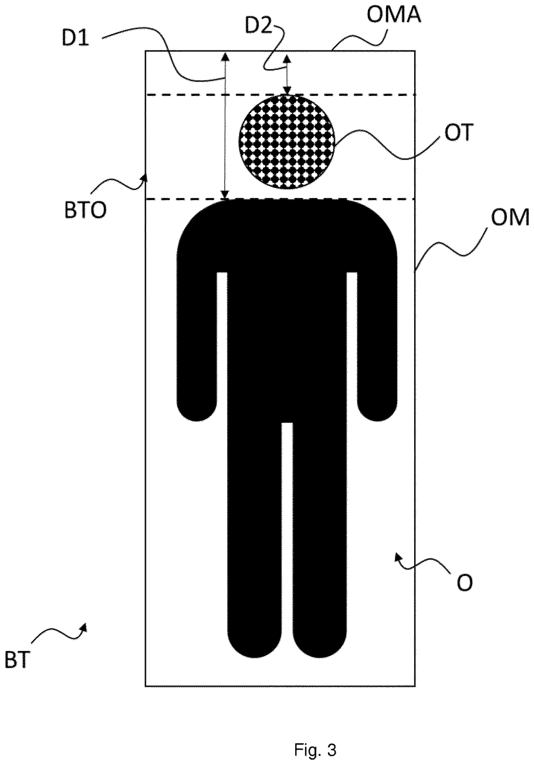

Das eigentliche Analyseverfahren zur Bewertung der Korrektheit von Objektmarkierungen in Bilddaten wird nun mit Blick auf eine spezifische Darstellung des Verfahrens in Fig. 2 für ein Ausführungsbeispiel beschrieben und anhand von Fig. 3 veranschaulicht.

Das Analyseverfahren erhält als Eingabe den Bildteil BT, der von der Objektmarkierung OM, die als Polygonlinienzug bzw. Rechteck definiert sein kann, eingeschlossen ist (Schritt S10).

Im Schritt S11 wird geprüft, ob ein Objekt O ohne Objektteil OT, hier ein Körper ohne Kopf, erkannt werden kann. Das Bild wird mit einem Sliding-Window-Ansatz abgerastert. Der Inhalt der durch den Sliding-Window-Ansatz erzeugten Bildausschnitte wird mit dem HOG-SVM-2-Klassifikator bewertet. Die einzelnen Bildausschnitte erhalten folglich eine Bewertung gemäß einer Ausgabe des HOG-SVM-2-Klassifikators. Kann kein Körper ohne Kopf erkannt werden (Pfad N), so wird auf eine inkorrekte Platzierung der Objektmarkierung geschlossen (Schritt S16).

Wird indessen ein Körper ohne Kopf erkannt (Pfad J), so wird der Bildausschnitt mit der Bewertung ausgewählt, die die höchste Wahrscheinlichkeit für die Detektion des Körpers ohne Kopf bzw. des Objekts ohne Objektteil anzeigt.

Es erfolgt dann im Schritt S12 eine Berechnung bzw. Bestimmung einer Distanz D1 zu dem Bildausschnitt, der den Körper ohne Kopf zeigt, von einem Objektmarkierungsabschnitt OMA bzw. einem oberen Rand der Objektmarkierung OM bzw. der Bounding Box. Unter dem oberen Rand der Objektmarkierung OM ist hier der Rand einer rechteckigen Objektmarkierung OM zu verstehen, der bei Aufsicht auf den Bildteil BT bei gängiger Orientierung des Objekts O oben angeordnet ist. Die Distanz D1 wird dann mit dem in der Trainingsphase bestimmten Schwellenwert für die Höhe des Kopfes verglichen und ermöglicht eine erste Entscheidung, ob eine korrekte Positionierung der Objektmarkierung OM vorliegt. Ist die ermittelte Distanz D1 kleiner als der Schwellenwert für die Größe des Kopfes, so wird eine inkorrekte Platzierung der Objektmarkierung OM angenommen (Schritt S16). Insbesondere kann hier die Objektmarkierung OM den Kopf schneiden bzw. liegt der Rand der Objektmarkierung OM innerhalb der Größe bzw. der durchschnittlichen Größe, die für einen Kopf im Trainingsverfahren bestimmt wurde.

Liegt indessen die Distanz D1 über dem Schwellenwert, so wird davon ausgegangen, dass genügend Platz für die Aufnahme eines Kopfes innerhalb der Objektmarkierung existiert. Entsprechend kann ein Signal ausgegeben werden, das insbesondere eine inkorrekte Positionierung der Objektmarkierung OM anzeigt und zudem ausgibt, um wie viele Pixel die Position der Objektmarkierung OM in y-Richtung von der Idealposition abweicht.

Sollte die Distanz D1 größer als der Schwellenwert sein, so wird in Schritt S13 geprüft, ob ein Objektteil OT bzw. ein Kopf in der Objektmarkierung OM erkannt werden kann. Ein Bildteil BT (hier der obere) wird mit einem Cascading-Klassifikator untersucht. Wird kein Kopf detektiert, wird der Suchbereich vom oberen Bildrand aus schrittweise erweitert. Der Cascading-Klassifikator kann mehrere detektierte Köpfe und deren Koordinaten zurückgeben. Die Koordinaten werden verwendet, um Bildausschnitte der Köpfe zu erstellen und diese anschließend mit dem HOG-SVM-1-Klassifikator zu untersuchen.

Kann in Schritt S13 kein Kopf erkannt werden (Pfad N), so wird ebenfalls wiederum eine inkorrekte Platzierung der Objektmarkierung angenommen. Wird indessen ein Kopf erkannt (Pfad J), so kann das Analyseverfahren mit Schritt S14 fortgeführt werden.

In Schritt S14 wird dann der Ausschnitt mit der höchsten Bewertung für die Erkennung eines Kopfes gewählt und eine zweite Distanz D2 vom oberen Objektmarkierungsabschnitt OMA der Objektmarkierung OM zu dem Bildausschnitt, oder umgekehrt, bestimmt. Die zweite Distanz D2 wird mit einem zweiten Schwellenwert verglichen, der ebenfalls im Trainingsverfahren definiert wurde. Insbesondere gibt der zweite Schwellenwert einen Wert für einen Abstand zwischen Kopf und Objektmarkierung an. Ist nun die zweite Distanz D2 größer als der zweite Schwellenwert, so wird eine inkorrekte Platzierung der Objektmarkierung (Schritt S16) angenommen. Ist indessen die zweite Distanz kleiner als der zweite Schwellenwert, so wird von einer korrekten Objektmarkierung bzw. deren Platzierung in Schritt S15 ausgegangen.

Sollte in Schritt S14 eine inkorrekte Platzierung der Objektmarkierung OM durch das Analyseverfahren erkannt werden, so kann das Analyseverfahren wiederum ein Signal ausgeben, das die inkorrekte Platzierung anzeigt. Ebenso können die Abweichungen der Position der Objektmarkierung OM von der Idealposition in Pixeln ausgegeben werden, bspw. die Abweichung in Pixel in y-Richtung.

Bei jedem Schritt des Analyseverfahrens kann folglich ausgegeben werden, ob die jeweilige Prüfung erfolgreich oder nicht erfolgreich war, also ob eine korrekte oder inkorrekte Platzierung und/oder Größe der Objektmarkierung bzgl. des jeweiligen Schrittes erkannt wurde. Basierend darauf kann dann eine automatisierte Korrektur der Größe und/oder Position der Objektmarkierung erfolgen, die sich insbesondere durch die bestimmten Abweichungen der Distanzen von den jeweiligen Schwellenwerten ergeben, bzw. die Angaben in Pixeln.

Ausgangspunkt ist hierbei jeweils, dass die Trainings-Bilddaten insoweit korrekt sind, dass das zu erkennende Objekt O dort jeweils korrekt dargestellt ist, dass also beispielsweise ein Fußgänger oder Fahrradfahrer auch tatsächlich in dem Bild zu erkennen ist.

In dem Schritt S11 des Analyseverfahrens, in dem zunächst ein Objekt O ohne den Objektteil OT erkannt wird, also bspw. eine Person ohne Kopf, führt die Ausgabe, dass eine inkorrekte Platzierung der Objektmarkierung OM vorliegt dazu, dass auch weitergehende Aussagen darüber möglich sind, aus welchem Grund eine inkorrekte Objektmarkierung OM angenommen wird. Beispielsweise ist es möglich, dass ein Objekt O zumindest teilweise verdeckt ist, was es dem Analyseverfahren unmöglich macht, das Objekt O bzw. das Objekt O ohne Objektteil OT zu erkennen. Als Ausgabe kann dann bspw. die Zusatzinformation ausgegeben werden, dass das Objekt O an dieser Stelle nicht korrekt erkannt werden konnte. Die Annahme, dass ein Objekt O in den später zu analysierenden Bilddaten dargestellt ist, ist auch für die Daten, die geprüft werden sollen, entscheidend.

In Schritt S12 erfolgt vorzugsweise eine Aussage darüber, um wie viele Pixel die Objektmarkierung OM zu klein gewählt wurde. Eine zu kleine Objektmarkierung kann bspw. Folge einer zu geringen Größe der Objektmarkierung OM bzw. einer fehlerhaften Platzierung sein. Die vorzugsweise statistisch bestimmten Schwellenwerte definieren dann, wo eine Linie der Objektmarkierung vermutet wird.

Endet die Objektmarkierung tatsächlich innerhalb des Abstands zwischen dem Objekt O ohne Objektteil OT, also bspw. zwischen einer angenommenen Schulterlinie einer Person und einem "oberen" Objektmarkierungsabschnitt OMA der Objektmarkierung OM, so ist auch eine quantitative Aussage darüber möglich, um wieviel Pixel die Objektmarkierung OM (Bounding Box) zu klein gewählt wurde. Insbesondere kann auf Basis des statistischen Schwellenwerts eine Anzahl von Pixel ausgegeben werden, die der Objektmarkierungsabschnitt OMA der Objektmarkierung OM von einem statistisch bestimmten Objektmarkierungsabschnitt einer idealen Objektmarkierung OM beabstandet ist.

In Schritt S13 kann ein zusätzlicher Hinweis darauf ausgegeben werden, dass, falls kein Objektteil OT (insbesondere kein Kopf) erkannt wird, eine Verdeckung des Objektteils OT vorliegen kann. Alternativ kann auf Basis von bspw. anatomischen Normabweichungen (z.B. Person mit Buckel) eine Erkennung des Objektteils OT, insbesondere eines Kopfes, nicht möglich sein. Diese Information kann mit zusätzlichen Daten angereichert werden.

In Schritt S14 erfolgt bei einer fehlerhaften Platzierung der Objektmarkierung OM eine Aussage darüber, wie viele Pixel der Objektmarkierungsabschnitt der Objektmarkierung OM von einem statistisch bestimmten Objektmarkierungsabschnitt der Objektmarkierung OM beabstandet ist. So kann z.B. eine quantitative Aussage darüber getroffen werden, um wie viele Pixel zu hoch eine obere Linie einer Objektmarkierung OM angesetzt wurde.

Werden indessen die Schritte S10 bis S15 durchlaufen und es wird keine inkorrekte Platzierung der Objektmarkierung OM festgestellt, so ist ebenfalls eine qualitative Aussage über die Platzierung der Objektmarkierung OM möglich. Diese bestimmt sich insbesondere aufgrund eines Vergleichs mit den statistischen Schwellenwerten, die für das jeweils zu prüfende Bild verglichen werden. Die Qualität der Objektmarkierung OM bestimmt sich dabei insbesondere auf Basis der Abweichung der Objektmarkierung OM von den statistisch bestimmten Schwellenwerten. Dazu kann eine separate Klassifikation der Abweichung erfolgen. Beispielsweise kann anhand einer Tabelle festgelegt werden, bei welcher Abweichung eine bestimmte Güte der Objektmarkierungsplatzierung angenommen wird.

Bei der üblichen Orientierung eines Fußgängers in einem Bild, ist der Kopf oben anzunehmen. Somit ist, bei Aufsicht auf ein Bild, die "obere Kante" der Objektmarkierung OM die relevante Kante der Objektmarkierung OM. Der Kopf bzw. der Körper ohne Kopf dienen als Ausganspunkt, von dem aus auf statistische Art und Weise Abstände nach oben, d.h. zur oberen Kante der Objektmarkierung bestimmt werden können. Die Erkennung des Kopfes gibt dabei ein Maß vor, gegenüber dem die Lage der oberen Kante der Objektmarkierung/Bounding Box geprüft und bestimmt werden kann.

Dabei ist jedoch zu verstehen, dass auch eine implizite qualitative Aussage darüber erfolgen kann, ob ein Körper auch innerhalb der linken bzw. rechten Grenze der Objektmarkierung OM liegt. Dies erfolgt dadurch, dass in dem ersten Schritt S11 ein Körper, der mit einer Seitenkante der Objektmarkierung OM verschnitten ist, nicht als in der Objektmarkierung liegend erkannt wird. Es wird dann eine inkorrekte Platzierung der Objektmarkierung ausgegeben. Weiter ist zu verstehen, dass für das spezifische Ausführungsbeispiel für den Fußgänger bzw. einen Radfahrer auch andere Objektteile des Objekts und ihre Lage zu einem Rand bzw. einer Kante der Objektmarkierung geprüft werden können. Es muss lediglich ein entsprechender Klassifikator gewählt werden, der bspw. eine Hand oder einen Fuß in der Objektmarkierung erkennen kann. So lässt sich bspw., wenn eine Hand erkannt wird, eine Aussage über die Lage zur rechten bzw. linken Kante der jeweiligen Objektmarkierung OM treffen.

Bei Erkennung eines Fußes oder einer Beinpartie kann jeweils die Lage einer unteren Kante der Objektmarkierung überprüft werden. Für jeden erkannten Objektteil eines Objekts können folglich entsprechende Distanzwerte ermittelt werden und mit Schwellenwerten verglichen werden, die in der Trainingsphase für den jeweiligen Objektteil bzw. basierend darauf bestimmt wurden. Wiederum kann dann zunächst eine Erkennung des Objekts ohne den Objektteil erfolgen und im Nachgang dann eine Erkennung des Objektteils, analog zu dem für den Kopf eines Fußgängers beschriebenen Verfahren.

Die Ausführung des Analyseverfahrens ist insbesondere deshalb wichtig, da für die Anwendung im Fahrzeug vor allem die Kopfregion eines Fußgängers von hoher Bedeutung ist. Die Erkennung des Kopfes kann in dem Analyseverfahren durch ein entsprechend erkanntes Körperteil ersetzt werden.

Vor einer Überprüfung der Objektmarkierung OM, d.h. insbesondere vor Schritt S10 oder Schritt S11, kann das Analyseverfahren prüfen, ob auf dem Bild das richtige Objekt O mit der Objektmarkierung OM markiert wurde bzw., ob das Objekt O zu einer bestimmten Objektklasse gehört, ob also z.B. ein Fußgänger markiert wurde. Das Analyseverfahren kann dann testen ob die Art oder der Typ des Objekts O, z.B. ein Fußgänger, dessen Objektmarkierung OM geprüft werden soll, tatsächlich vorhanden ist, oder ob ein anderer Objekttyp vorliegt, z.B. ein Fahrzeug oder ein Fahrradfahrer. Diese Prüfung kann auch unabhängig von dem Analyseverfahren erfolgen.

Wurde bspw. definiert, dass ein Fußgänger markiert ist, bei einer Definition der Objektmarkierung wurde aber fälschlicherweise ein Fahrzeug markiert, kann das Analyseverfahren dies erkennen.

Das Analyseverfahren kann zu der Prüfung des Objekttyps z.B. Seitenverhältnisse der Objektmarkierungen überprüfen, wobei ein Toleranzbereich bzw. wenigstens ein Schwellenwert für ein Seitenverhältnis definiert sein kann. Sollte ein Seitenverhältnis nicht innerhalb des Toleranzbereichs liegen, d.h. ein bestimmtes Seitenverhältnis liegt insbesondere über oder unter dem wenigstens einen Schwellenwert, wird für das Bild ein Signal ausgegeben. Das Signal zeigt dann an, dass die Objektmarkierung OM ein falsches Objekt O markiert, bzw. das Objekt O nicht von dem zu prüfenden Typ ist, also nicht der richtigen Objektklasse angehört. Das Analyseverfahren kann dann beendet werden.

Das Analyseverfahren kann durch eine Analyseeinheit ausgeführt werden, die die Bilder, z.B. in Form eines Videosignals, vorzugsweise in Echtzeit, verarbeiten, speichern und die Signale ausgeben kann. Die Analyseeinheit kann dazu wenigstens einen Prozessor, verwenden, z.B. ein "System on Chip" (dt.: Ein-Chip-System). Es können eine oder mehrere CPU (Central Processing Unit, dt.: Prozessor) und/oder GPU, Encoder sowie Schnittstellen zum Anschließen verschiedener Sensoren, wie beispielsweise optische Sensoren oder Kameras verwendet werden. Die eine oder mehreren CPUs/GPUs können auch Programmcode ausführen; insbesondere kann das Analyseverfahren durch Programmcode definiert sein. Die wenigstens eine CPU/GPU kann das parallelisierte Ausführen von Rechenoperationen ermöglichen, beispielsweise das Berechnen mit Open GL oder das Einfügen von Überlagerungsbilddaten in Bilddaten. Ein Image Signal Prozessor (ISP) kann zur Bildaufbereitung dienen. Dieser kann beispielsweise Daten von Bildern und/oder Bildsensoren entgegennehmen und die Qualität beispielsweise durch einen automatischen Weißabgleich erhöhen. Die Analyseeinheit weist weiter wenigstens einen flüchtigen und/oder nichtflüchtigen Speicher auf, der die Bilddaten und/oder die Trainings-Bilddaten zumindest Teilweise speichert. Aus dem wenigstens einen flüchtigen und/oder nichtflüchtigen Speicher werden die die Bilddaten, Daten über Objektmarkierungen OM und/oder die Trainings-Bilddaten von dem Analyseverfahren ausgelesen, wenn das Analyseverfahren auf dem Prozessor (CPU und/oder GPU) ausgeführt wird.

Eine Ausgabe der Signale kann dann akustisch und/oder optisch auf einer Anzeigeeinheit erfolgen. Alternativ oder zusätzlich kann die Information der Signale in den wenigstens einen und/oder einen anderen flüchtigen und/oder nichtflüchtigen Speicher ausgegeben werden, z.B. in eine Datei. Die Bilddaten und/oder die Trainings-Bilddaten können der Analyseeinheit auch über einen optischen Sensor (z.B. Kamera) zugeführt werden.

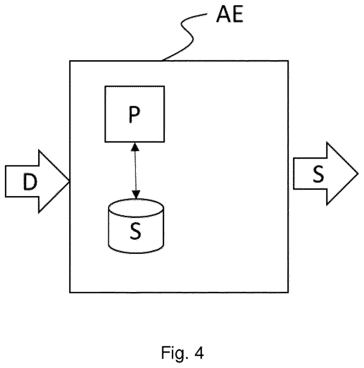

Fig. 4 zeigt schematisch eine Analyseeinheit AE. Der Analyseeinheit AE werden Daten D eingegeben, die von der Analyseeinheit AE empfangen, in wenigstens einem Speicher S gespeichert und mittels wenigstens eines Prozessors P ausgewertet und verarbeitet werden können. Die Analyseeinheit AE gibt dann die Signale S entsprechend aus.

Das Analyseverfahren kann in Form von Computerprogrammanweisungen in dem Speicher S gespeichert sein, und die Computerprogrammanweisungen können zumindest von der Analyseeinheit AE zur Ausführung eines Analyseverfahrens ausgeführt werden. Die Computerprogrammanweisungen können als Computerprogrammprodukt aufbewahrt werden.

## Patentansprüche

1. Verfahren zur Analyse von Trainingsdaten für eine Umfelderfassung eines Fahrzeugs, um ein maschinelles Lernen eines Erscheinungsbildes eines vorbestimmten Objekts zu verbessern, wobei
- das Verfahren Daten wenigstens eines Bildes aus einem Speicher (S) liest (S1),
- das Bild ein vorbestimmtes Objekt (O) zeigt,
- ein vorbestimmter Objektteil (OT) des vorbestimmten Objekts (O) spezifiziert ist und
- für das vorbestimmte Objekt (O) eine Objektmarkierung (OM) definiert ist, die das vorbestimmte Objekt (O) umgibt,
**dadurch gekennzeichnet,**
a) **dass** das Verfahren bestimmt, ob das vorbestimmte Objekt (O) ohne den vorbestimmten Objektteil (OT) im Inneren der Objektmarkierung (OM) mittels eines Klassifikators detektiert werden kann (S2),
- wobei das Verfahren, wenn das vorbestimmte Objekt (O) ohne den vorbestimmten Objektteil (OT) im Inneren der Objektmarkierung (OM) nicht detektiert werden kann, ein erstes Signal ausgibt (S3), das anzeigt, dass die Objektmarkierung (OM) inkorrekt definiert ist,
b) dass das Verfahren andernfalls eine Distanz (D1) zwischen einem Objektmarkierungsabschnitt (OMA) der Objektmarkierung (OM), der von einem Schwerpunkt des Objekts (O) ohne den vorbestimmten Objektteil (OT) aus in Richtung des vorbestimmten Objektteils (OT) zuerst erreicht wird, und dem vorbestimmten Objekt (O) ohne den vorbestimmten Objektteil (OT) ermittelt (S12) und prüft, ob diese Distanz (D1) einen Schwellenwert überschreitet/unterschreitet,
- wobei das Verfahren, wenn die ermittelte Distanz (D1) den Schwellenwert unterschreitet, ein zweites Signal ausgibt (S16), das anzeigt, dass die Objektmarkierung (OM) inkorrekt definiert ist,
c) dass das Verfahren andernfalls, wenn die ermittelte Distanz (D1) den Schwellenwert überschreitet, weiterhin bestimmt, ob der vorbestimmter Objektteil (OT) in dem Bild mittels des Klassifikators detektiert werden kann (S13), und, wenn der vorbestimmte Objektteil (OT) in dem Bild nicht detektiert wird, ein drittes Signal ausgibt (S16), das anzeigt, dass die Objektmarkierung (OM) inkorrekt definiert ist,
d) dass das Verfahren andernfalls, wenn der vorbestimmte Objektteil (OT) in dem Bild detektiert werden kann, weiterhin eine zweite Distanz (D2) zwischen dem Objektmarkierungsabschnitt (OMA) und dem vorbestimmten Objektteil (OT) bestimmt und bestimmt, ob die zweite Distanz (D2) einen zweiten Schwellenwert überschreitet/unterschreitet,
- wobei das Verfahren, wenn die zweite Distanz (D2) den zweiten Schwellenwert überschreitet, ein viertes Signal ausgibt (S14), das anzeigt, dass die Objektmarkierung (OM) inkorrekt definiert ist, und
e) dass das Verfahren andernfalls, wenn die zweite Distanz (D2) den zweiten Schwellenwert unterschreitet, ein fünftes Signal ausgibt (S15), das anzeigt, dass die Objektmarkierung (OM) für das vorbestimmte Objekt (O) korrekt definiert ist.

2. Verfahren nach Anspruch 1, wobei das Verfahren Daten zur Objektmarkierung (OM) mit den Daten des Bildes aus dem Speicher (S) einliest, oder die Objektmarkierung (OM) in Daten des Bildes erkennt.

3. Verfahren nach einem der vorhergehenden Ansprüche, wobei das Verfahren mit der Ausgabe der Signale einen Pixel-Wert ausgibt (S12, S14), der angibt, um wieviel eine Position der Objektmarkierung (OM) von einer vorbestimmten idealen Position der Objektmarkierung (OM) abweicht.

4. Verfahren nach einem der vorhergehenden Ansprüche, wobei dem Verfahren vor dem Detektieren des vorbestimmten Objekts (O) ohne den vorbestimmten Objektteil (OT) Daten von Trainings-Bildern zugeführt werden, die jeweils wenigstens ein Objekt von einer Klasse des vorbestimmten Objekts (O) aufweisen, wobei für das Objekt jeweils wenigstens eine Objektmarkierung (OM) mit einer vorbestimmten Abweichung definiert ist und wobei jedes Objekt ein Objektteil aufweist.

5. Verfahren nach einem der vorhergehenden Ansprüche, wobei das Verfahren für die Trainings-Bilder jeweils den vorbestimmten Objektteil (OT) detektiert und dafür den Schwellenwert ermittelt, wobei der Schwellenwert eine Dimension des vorbestimmten Objektteils (OT) wiedergibt.

6. Verfahren nach einem der vorhergehenden Ansprüche, wobei das Verfahren für die Trainings-Bilder jeweils eine Distanz (D2) zwischen einem Objektmarkierungsabschnitt (OMA) und dem vorbestimmten Objektteil (OT) bestimmt und daraus den zweiten Schwellenwert ermittelt, wobei der zweite Schwellenwert eine Distanz von einem Objektmarkierungsabschnitt (OMA) zu dem vorbestimmten Objektteil (OT) wiedergibt.

7. Verfahren nach einem der vorhergehenden Ansprüche, wobei die Objektmarkierung (OM) im Wesentlichen ein Polygonlinienzug ist.

8. Verfahren nach einem der vorhergehenden Ansprüche, wobei das vorbestimmte Objekt (O) ein Fußgänger oder ein Radfahrer ist.

9. Verfahren nach einem der vorhergehenden Ansprüche, wobei der vorbestimmte Objektteil (OT) ein Kopf, eine Hand, ein Arm, ein Fuß, ein Bein oder ein Teil davon ist.

10. Verfahren nach einem der vorhergehenden Ansprüche, wobei das Verfahren zu Beginn den durch die Objektmarkierung (OM) definierten Bildteil (BT) extrahiert und die weiteren Schritte des Verfahrens auf dem Bildteil (BT) ausführt.

11. Verfahren nach einem der Ansprüche 4 bis 10, wobei das Verfahren zu Beginn überprüft, ob ein durch die Objektmarkierung (OM) definiertes Objekt (O) von der Klasse des vorbestimmten Objekts (O) ist, wobei das Verfahren ein Seitenverhältnis der Objektmarkierung (OM) bestimmt, mit wenigstens einem Schwellenwert für das Seitenverhältnis vergleicht und ein Signal ausgibt, das anzeigt, dass das Objekt (O) von der Klasse des vorbestimmten Objekts (O) ist oder nicht, wenn der Schwellenwert für das Seitenverhältnis überschritten/unterschritten wird.

12. Verfahren nach einem der vorhergehenden Ansprüche, wobei das Verfahren auf Basis der Trainings-Bilder wenigstens einen Klassifikator für das vorbestimmte Objekt (O) ohne den vorbestimmten Objektteil (OT) und/oder den vorbestimmten Objektteil (OT) definiert, und/oder wobei das Verfahren den wenigstens einen Klassifikator zur Detektion des vorbestimmten Objekts (O) ohne den vorbestimmten Objektteil (OT) und/oder des vorbestimmten Objektteils (OT) einsetzt.

13. Verfahren nach einem der vorhergehenden Ansprüche, wobei das Verfahren auf Basis der Trainings-Bilder wenigstens einen Cascading-Klassifikator und/oder wenigstens zwei HOG-SVM-Klassifikatoren definiert, wobei das Verfahren einen HOG-SVM-Klassifikator zur Detektion des vorbestimmten Objekts (O) ohne den vorbestimmten Objektteil (OT) einsetzt und/oder den Cascading-Klassifikator und/oder einen zweiter HOG-SVM-Klassifikator zur Detektion des vorbestimmten Objektteils (OT) einsetzt.

14. Verfahren nach einem der vorhergehenden Ansprüche, wobei das Verfahren eine Abweichung der Objektmarkierung von einer vorbestimmten idealen Position und/oder Größe der Objektmarkierung bestimmt und die Abweichung automatisch korrigiert und/oder ein Signal ausgibt, das anzeigt, wie die Objektmarkierung auf die ideale Position und/oder Größe anzupassen ist.

15. Verfahren nach einem der vorhergehenden Ansprüche,
wobei das vorbestimme Objekt (O) ein menschlicher Körper ist,
wobei der vorbestimmte Objektteil (OT) ein Kopf ist,
wobei die Objektmarkierung (OM) ein Rechteck ist und
wobei der Objektmarkierungsabschnitt (OMA) der obere Rand des Rechtecks ist.

16. Computerprogrammprodukt, wobei das Computerprogrammprodukt Computerprogrammanweisungen in einem computerlesbaren Speicher (S) speichert, und die Computerprogrammanweisungen zumindest eine Analyseeinheit (AE) zur Ausführung eines Verfahrens nach einem der vorhergehenden Ansprüche veranlasst, wenn die Computerprogrammanweisungen von der Analyseeinheit (AE) gelesen und/oder ausgeführt werden.

17. Analyseeinheit (AE) zur Analyse von Trainingsdaten für eine Umfelderfassung eines Fahrzeugs, um ein maschinelles Lernen eines Erscheinungsbildes eines vorbestimmten Objekts zu verbessern,
wobei die Analyseeinheit wenigstens einen Speicher (S), der die Bilddaten (D), Daten zu Objektmarkierungen (OM) und/oder die Trainings-Bilddaten speichert und einen Prozessor (P) aufweist, der dazu eingerichtet ist, ein Verfahren nach einem der Ansprüche 1 bis 15 auszuführen, wobei bei der Ausführung die Bilddaten (D), Daten zu Objektmarkierungen (OM) und/oder die Trainings-Bilddaten von der Analyseeinheit (AE) aus dem Speicher (S) ausgelesen und durch den Prozessor (P) verarbeitet werden, und wobei die Analyseeinheit (AE) Signale des Verfahrens ausgibt.

## Claims

1. Method for analysing training data for vehicle environment sensing in order to improve machine learning of an appearance of a predetermined object, wherein
- the method reads (S1) data of at least one image from a memory (S),
- the image shows a predetermined object (O),
- a predetermined object portion (OT) of the predetermined object (O) is specified and
- an object marking (OM) surrounding the predetermined object (O) is defined for the predetermined object (O), **characterized**
a) **in that** the method determines whether the predetermined object (O) without the predetermined object portion (OT) can be detected (S2) within the object marking (OM) by means of a classifier,
- wherein the method, if the predetermined object (O) without the predetermined object portion (OT) cannot be detected within the object marking (OM), outputs (S3) a first signal indicating that the object marking (OM) is incorrectly defined,
b) in that the method otherwise ascertains (S12) a distance (D1) between an object marking section (OMA) of the object marking (OM), which object marking section is reached first by a centroid of the object (O) without the predetermined object portion (OT) in the direction of the predetermined object portion (OT), and the predetermined object (O) without the predetermined object portion (OT) and checks whether this distance (D1) exceeds/falls below a threshold value,
- wherein the method, if the ascertained distance (D1) falls below the threshold value, outputs (S16) a second signal indicating that the object marking (OM) is incorrectly defined,
c) in that the method otherwise, if the ascertained distance (D1) exceeds the threshold value, furthermore determines whether the predetermined object portion (OT) can be detected (S13) in the image by means of the classifier and, if the predetermined object portion (OT) is not detected in the image, outputs (S16) a third signal indicating that the object marking (OM) is incorrectly defined,
d) in that the method otherwise, if the predetermined object portion (OT) can be detected in the image, furthermore determines a second distance (D2) between the object marking section (OMA) and the predetermined object portion (OT) and determines whether the second distance (D2) exceeds/falls below a second threshold value,
- wherein the method, if the second distance (D2) exceeds the second threshold value, outputs (S14) a fourth signal indicating that the object marking (OM) is incorrectly defined, and
e) in that the method otherwise, if the second distance (D2) falls below the second threshold value, outputs (S15) a fifth signal indicating that the object marking (OM) is correctly defined for the predetermined object (O) .

2. Method according to Claim 1, wherein the method reads in data concerning the object marking (OM) with the data of the image from the memory (S), or recognizes the object marking (OM) in data of the image.

3. Method according to either of the preceding claims, wherein the method, by way of the outputting of the signals, outputs (S12, S14) a pixel value specifying by how much a position of the object marking (OM) deviates from a predetermined ideal position of the object marking (OM) .

4. Method according to any of the preceding claims, wherein before the detection of the predetermined object (O) without the predetermined object portion (OT), the method is supplied with data of training images which each comprise at least one object from a class of the predetermined object (O), wherein in each case at least one object marking (OM) with a predetermined deviation is defined for the object and wherein each object comprises an object portion.

5. Method according to any of the preceding claims, wherein the method, for each of the training images, detects the predetermined object portion (OT) and ascertains the threshold value therefor, wherein the threshold value represents a dimension of the predetermined object portion (OT).

6. Method according to any of the preceding claims, wherein the method, for each of the training images, determines a distance (D2) between an object marking section (OMA) and the predetermined object portion (OT) and ascertains the second threshold value therefrom, wherein the second threshold value represents a distance from an object marking section (OMA) to the predetermined object portion (OT).

7. Method according to any of the preceding claims, wherein the object marking (OM) is substantially a polygon line progression.

8. Method according to any of the preceding claims, wherein the predetermined object (O) is a pedestrian or a cyclist.

9. Method according to any of the preceding claims, wherein the predetermined object portion (OT) is a head, a hand, an arm, a foot, a leg or a portion thereof.

10. Method according to any of the preceding claims, wherein the method initially extracts the image portion (BT) defined by the object marking (OM) and executes the further steps of the method on the image portion (BT).

11. Method according to any of Claims 4 to 10, wherein the method initially checks whether an object (O) defined by the object marking (OM) is from the class of the predetermined object (O), wherein the method determines an aspect ratio of the object marking (OM), compares it with at least one threshold value for the aspect ratio and outputs a signal indicating that the object (O) is or is not from the class of the predetermined object (O) if the aspect ratio exceeds/falls below the threshold value for the aspect ratio.

12. Method according to any of the preceding claims, wherein the method, on the basis of the training images, defines at least one classifier for the predetermined object (O) without the predetermined object portion (OT) and/or the predetermined object portion (OT), and/or wherein the method uses the at least one classifier for detecting the predetermined object (O) without the predetermined object portion (OT) and/or the predetermined object portion (OT).

13. Method according to any of the preceding claims, wherein the method, on the basis of the training images, defines at least one cascading classifier and/or at least two HOG-SVM classifiers, wherein the method uses one HOG-SVM classifier for detecting the predetermined object (O) without the predetermined object portion (OT) and/or uses the cascading classifier and/or a second HOG-SVM classifier for detecting the predetermined object portion (OT) .

14. Method according to any of the preceding claims, wherein the method determines a deviation of the object marking from a predetermined ideal position and/or size of the object marking and automatically corrects the deviation and/or outputs a signal indicating how the object marking should be adapted to the ideal position and/or size.

15. Method according to any of the preceding claims, wherein the predetermined object (O) is a human body, wherein the predetermined object portion (OT) is a head, wherein the object marking (OM) is a rectangle and wherein the object marking section (OMA) is the upper edge of the rectangle.

16. Computer program product, wherein the computer program product stores computer program instructions in a computer-readable memory (S), and the computer program instructions cause at least one analysis unit (AE) to execute a method according to any of the preceding claims when the computer program instructions are read and/or executed by the analysis unit (AE).

17. Analysis unit (AE) for analysing training data for vehicle environment sensing in order to improve machine learning of an appearance of a predetermined object, wherein the analysis unit comprises at least a memory (S), which stores the image data (D), data concerning object markings (OM) and/or the training image data, and a processor (P) configured to execute a method according to any of Claims 1 to 15, wherein in the course of execution, the image data (D), data concerning object markings (OM) and/or the training image data are read from the memory (S) by the analysis unit (AE) and are processed by the processor (P), and wherein the analysis unit (AE) outputs signals of the method.

## Revendications

1. Procédé d'analyse de données d'entraînement pour une acquisition de l'environnement d'un véhicule, afin d'améliorer un apprentissage automatique d'un aspect d'un objet prédéterminé,
- le procédé lisant (S1) des données d'au moins une image à partir d'une mémoire (S),
- l'image montrant un objet prédéterminé (O),
- une partie d'objet prédéterminée (OT) de l'objet prédéterminé (O) étant spécifiée, et
- un marquage d'objet (OM) étant défini pour l'objet prédéterminé (O), lequel entoure l'objet prédéterminé (O),
**caractérisé en ce**
a) **que** le procédé détermine si l'objet prédéterminé (O) peut être détecté (S2) au moyen d'un classificateur sans la partie d'objet prédéterminée (OT) à l'intérieur du marquage d'objet (OM),
- le procédé, lorsque l'objet prédéterminé (O) ne peut pas être détecté sans la partie d'objet prédéterminée (OT) à l'intérieur du marquage d'objet (OM), délivrant (S3) un premier signal qui indique que le marquage d'objet (OM) est défini de manière incorrecte,
b) que, sinon, le procédé identifie (S12) une distance (D1) entre une portion de marquage d'objet (OMA) du marquage d'objet (OM), qui est atteinte en premier à partir d'un centre de gravité de l'objet (O) sans la partie d'objet prédéterminée (OT) dans la direction de la partie d'objet prédéterminée (OT), et l'objet prédéterminé (O) sans la partie d'objet prédéterminée (OT) et vérifie si cette distance (D1) dépasse/n'atteint pas une valeur de seuil,
- le procédé, lorsque la distance identifiée (D1) n'atteint pas la valeur de seuil, délivrant (S16) un deuxième signal qui indique que le marquage d'objet (OM) est défini de manière incorrecte,
c) que, sinon, lorsque la distance identifiée (D1) dépasse la valeur de seuil, le procédé détermine en outre si la partie d'objet prédéterminée (OT) peut être détectée dans l'image au moyen du classificateur (S13) et, si la partie d'objet prédéterminée (OT) n'est pas détectée dans l'image, délivre (S16) un troisième signal qui indique que le marquage d'objet (OM) est défini de manière incorrecte,
d) que, sinon, lorsque la partie d'objet prédéterminée (OT) peut être détectée dans l'image, le procédé détermine en outre une deuxième distance (D2) entre la portion de marquage d'objet (OMA) et la partie d'objet prédéterminée (OT) et détermine si la deuxième distance (D2) dépasse/n'atteint pas une deuxième valeur de seuil,
- le procédé, lorsque la deuxième distance déterminée (D2) dépasse la valeur de seuil, délivrant (S14) un quatrième signal qui indique que le marquage d'objet (OM) est défini de manière incorrecte,
e) que, sinon, lorsque la deuxième distance (D2) n'atteint pas la deuxième valeur de seuil, le procédé délivre (S15) un cinquième signal qui indique que le marquage d'objet (OM) est correctement défini pour l'objet prédéterminé (0).

2. Procédé selon la revendication 1, le procédé lisant des données relatives au marquage d'objet (OM) avec les données de l'image à partir de la mémoire (S), ou reconnaissant le marquage d'objet (OM) dans des données de l'image.

3. Procédé selon l'une des revendications précédentes, le procédé délivrant (S12, S14), avec la délivrance des signaux, une valeur de pixel qui indique la valeur de l'écart entre une position du marquage d'objet (OM) et une position idéale prédéterminée du marquage d'objet (OM) .

4. Procédé selon l'une des revendications précédentes, des données d'image d'entraînement étant acheminée au procédé avant la détection de l'objet prédéterminé (O) sans la partie d'objet prédéterminée (OT), lesquelles présentent respectivement au moins un objet d'une classe de l'objet prédéterminé (O), au moins un marquage d'objet (OM) avec un écart prédéterminé étant respectivement défini pour l'objet, et chaque objet possédant une partie d' objet.

5. Procédé selon l'une des revendications précédentes, le procédé détectant respectivement la partie d'objet prédéterminée (OT) pour les images d'entraînement et identifiant à cet effet la valeur de seuil, la valeur seuil reproduisant une dimension de la partie d'objet prédéterminée (OT).

6. Procédé selon l'une des revendications précédentes, le procédé déterminant, pour les images d'entraînement, respectivement une distance (D2) entre une portion de marquage d'objet (OMA) et la partie d'objet prédéterminée (OT) et identifiant à partir de celle-ci la deuxième valeur de seuil, la deuxième valeur de seuil reproduisant une distance entre une portion de marquage d'objet (OMA) et la partie d'objet prédéterminée (OT).

7. Procédé selon l'une des revendications précédentes, le marquage d'objet (OM) étant sensiblement un tracé polygonal.

8. Procédé selon l'une des revendications précédentes, l'objet prédéterminé (O) étant un piéton ou un cycliste.

9. Procédé selon l'une des revendications précédentes, la partie d'objet prédéterminée (OT) étant une tête, une main, un bras, un pied, une jambe ou une partie de ceux-ci .

10. Procédé selon l'une des revendications précédentes, le procédé commençant par extraire la partie d'image (BT) définie par le marquage d'objet (OM) et exécutant les étapes supplémentaires du procédé sur la partie d'image (BT) .

11. Procédé selon l'une des revendications 4 à 10, le procédé commençant par vérifier si un objet (O) défini par le marquage d'objet (OM) est de la classe de l'objet prédéterminé (O), le procédé déterminant un rapport d'aspect du marquage d'objet (OM), le comparant à au moins une valeur de seuil pour le rapport d'aspect et délivrant un signal qui indique que l'objet (O) est ou non de la classe de l'objet prédéterminé (O) lorsque la valeur de seuil pour le rapport d'aspect est dépassée/non atteinte.

12. Procédé selon l'une des revendications précédentes, le procédé définissant, sur la base des images d'entraînement, au moins un classificateur pour l'objet prédéterminé (O) sans la partie d'objet prédéterminée (OT) et/ou la partie d'objet prédéterminée (OT), et/ou le procédé utilisant l'au moins un classificateur pour la détection de l'objet prédéterminé (O) sans la partie d'objet prédéterminée (OT) et/ou de la partie d'objet prédéterminée (OT).

13. Procédé selon l'une des revendications précédentes, le procédé définissant, sur la base des images d'entraînement, au moins un classificateur en cascade et/ou au moins deux classificateurs HOG-SVM, le procédé utilisant un classificateur HOG-SVM pour la détection de l'objet prédéterminé (O) sans la partie d'objet prédéterminée (OT) et/ou utilisant le classificateur en cascade et/ou un deuxième classificateur HOG-SVM pour la détection de la partie d'objet prédéterminée (OT).

14. Procédé selon l'une des revendications précédentes, le procédé déterminant un écart entre le marquage d'objet et une position et/ou une taille idéale prédéterminée du marquage d'objet et corrigeant automatiquement l'écart et/ou délivrant un signal qui indique comment le marquage d'objet doit être adapté à la position et/ou à la taille idéale.

15. Procédé selon l'une des revendications précédentes, l'objet prédéterminé (O) étant un corps humain,
la partie d'objet prédéterminée (OT) étant une tête,
le marquage d'objet (OM) étant un rectangle et
la portion de marquage d'objet (OMA) étant le bord supérieur du rectangle.

16. Produit de programme informatique, le produit de programme informatique enregistrant des instructions de programme informatique dans une mémoire (S) lisible par ordinateur, et les instructions de programme informatique amenant au moins une unité d'analyse (AE) à mettre en œuvre un procédé selon l'une des revendications précédentes lorsque les instructions de programme informatique sont lues et/ou exécutées par l'unité d'analyse (AE).

17. Unité d'analyse (AE) destinée à analyser des données d'entraînement pour une acquisition de l'environnement d'un véhicule, afin d'améliorer un apprentissage automatique d'un aspect d'un objet prédéterminé, l'unité d'analyse possédant au moins une mémoire (S), qui enregistre les données d'image (D), les données relatives aux marquages d'objet (OM) et/ou les données d'image d'entraînement, et un processeur (P), lequel est conçu pour mettre en œuvre un procédé selon l'une des revendications 1 à 15, les données d'image (D), les données relatives aux marquages d'objet (OM) et/ou les données d'image d'entraînement, lors de la mise en oeuvre, étant lues par l'unité d'analyse (AE) depuis la mémoire (S) et traitées par le processeur (P), et l'unité d'analyse (AE) délivrant les signaux du procédé.
